# EUROPÄISCHE PATENTSCHRIFT

(11) **EP 0 622 279 B1**
(45) Veröffentlichungstag und Bekanntmachung des Hinweises auf die Patenterteilung: **23.07.1997**
(21) Anmeldenummer: 94105781.2
(22) Anmeldetag: 14.04.1994
(51) Int. Cl.: B60R 22/00, B60R 22/46, B60R 21/32

(54) **Zündmechanismus für einen pyrotechnischen Gasgenerator**
Ignition mechanism for a pyrotechnic gas generator
Dispositif d'allumage pour générateur pyrotechnique de gaz

(30) Priorität: 30.04.1993 DE 4314348
(43) Veröffentlichungstag der Anmeldung: 02.11.1994
(73) Patentinhaber: TRW Occupant Restraint Systems GmbH, 73553 Alfdorf (DE)
(72) Erfinder: Röhrle, Martin, D-73557 Mutlangen (DE)
(74) Vertreter: Degwert, Hartmut, Dipl.-Phys.

(56) Entgegenhaltungen:
- FR-A- 2 377 638
- US-A- 3 601 081
- US-A- 4 927 172

## Beschreibung

Die Erfindung betrifft einen Zündmechanismus für einen pyrotechnischen Gasgenerator gemäß der in dem Oberbegriff des Patentanspruchs 1 angegebenen Art.

Ein solcher Zündmechanismus für einen Gasgenerator eines Insassenrückhaltesystems ist aus der US-PS 3,601,081, die ein Zündmechanismus nach dem Oberbegriff des Anspruchs 1 beschreibt, bekannt. Der Zündmechanismus ist in einem T-förmigen Gehäuse angeordnet, das zwei zueinander senkrecht verlaufende Durchgänge aufweist. In einem Durchgang ist ein Schlagelement, das einem Schlagzünder eines Gasgenerators zugeordnet ist, und in dem anderen Durchgang ist jeweils zwischen einer eingeschraubten Schraube und einem kugelförmigen Kraftübertragungselement für das Schlagelement eine Schraubenfeder gespannt. Das kugelförmige Kraftübertragungselement liegt an dem hinteren Teil des Schlagelements an, das ebenfalls in der Art einer Kugel ausgebildet ist. Über eine Stellschraube, die an der einen Seite an dem Schlageelement anliegt und in den Durchgang des Gehäuses für das Schlagelement eingeschraubt ist, ist die Lage des Schlagelements in bezug auf die beiden federbelasteten Kraftübertragungselemente einstellbar. Aufgrund der kugelförmig gewölbten Oberfläche der beiden Kraftübertragungselemente und des hinteren Teils des Schlagelements ergibt sich eine Steuerung, und zwar in der Art, daß bei Bewegung des Schlagelements in Richtung auf einen Schlagzünder eines Gasgenerators aufgrund der bei einer Beschleunigung des Fahrzeugs wirkenden Trägheitskräfte die auf das Schlagelement wirkende Federlast in eine erste Richtung auf die Stellschraube bis zu einem Totpunkt zunimmt und mit Überschreiten des Totpunkts die Wirkrichtung der Federlast auf das Schlagelement umgekehrt wird. Dann wird das Schlagelement zur Auslösung des Schlagzünders des Gasgenerators in eine zweite Richtung auf den Gasgenerator zu beschleunigt.

Der Erfindung liegt die Aufgabe zugrunde, einen Zündmechanismus der im Oberbegriff des Patentanspruchs 1 angegebenen Art dahingehend weiterzuentwickeln, daß eine einfache Fertigung bei hoher Reproduzierbarkeit der Auslösebedingungen ermöglicht wird.

Diese Aufgabe kann in Verbindung mit den Oberbegriffsmerkmalen des Patentanspruchs 1 dadurch gelöst werden, daß die Feder ein Drehmoment erzeugt, das durch eine Übersetzungseinrichtung in eine das Schlagelement beaufschlagende Axialkraft umgesetzt wird. Dadurch ergeben sich vorteilhafte konstruktive Möglichkeiten, die Bauform zu verkleinern und die Auslösebedingungen anwendungsgerecht einzustellen.

Beispielsweise können gemäß einer vorteilhaften Ausführungsform das Schlagelement drehfest und die Übersetzungseinrichtung drehbar im Gehäuse gelagert und zwischen der Übersetzungseinrichtung und dem Schlagelement wenigstens ein Steuerbereich vorgesehen sein, der der Übersetzungseinrichtung bzw. dem Schlagelement zugeordnete, ineinandergreifende Kurvenflächen enthält, die als Anlageflächen für ein zwischen der Übersetzungseinrichtung und dem Schlagelement vorgesehenes Kraftübertragungselement dienen.

Gemäß einer bevorzugten Ausführungsvariante ist vorgesehen, daß die drehbar im Gehäuse gelagerte Übersetzungseinrichtung axial festgelegt ist, daß der zwischen der Übersetzungseinrichtung und dem drehfest sowie axial verschiebbar gelagerten Schlagelement gelegene Steuerbereich beiderseits des Totpunktes Kurvenflächenabschnitte unterschiedlicher Neigung enthält, und daß diese unterschiedlichen Neigungen so gewählt sind, daß das Schlagelement in einer Ausgangsstellung durch eine durch die Feder bedingte Rückstellkraft gegen die Übersetzungseinrichtung gehalten ist, während es aufgrund der bei einer Beschleunigung des Fahrzeugs wirkenden Trägheitskräfte zunächst entgegen der Rückstellkraft zum Schlagzünder hin verschoben wird und nach einem Überschreiten des Totpunkts durch die gleiche Feder auf den Schlagzünder zu beschleunigt und hierbei von der Übersetzungseinrichtung getrennt wird.

Durch eine entsprechende Wahl der Federstärke sowie der Steilheit der betreffenden Kurvenflächenabschnitte können bei begrenztem Drehausschlag der Übersetzungseinrichtung hinreichend große Beschleunigungskräfte erzielt werden.

Weitere Merkmale und Vorteile der Erfindung ergeben sich aus der Beschreibung einer bevorzugten Ausführungsform der Erfindung unter Bezugnahme auf die Zeichnung. Es zeigen:
- Fig. 1: einen Teilschnitt durch einen Zündmechanismus gemäß einer Ausführungsform der Erfindung;
- Fig. 2: eine Schnittansicht entlang der Linie C-C von Fig. 1;
- Fig. 3: eine Schnittansicht entlang der Linie B-B von Fig. 1;
- Fig. 4: eine Schnittansicht entlang der Linie A-A von Fig. 1; und
- Fig. 5: eine Detaildarstellung entlang der Linie X von Fig. 1.

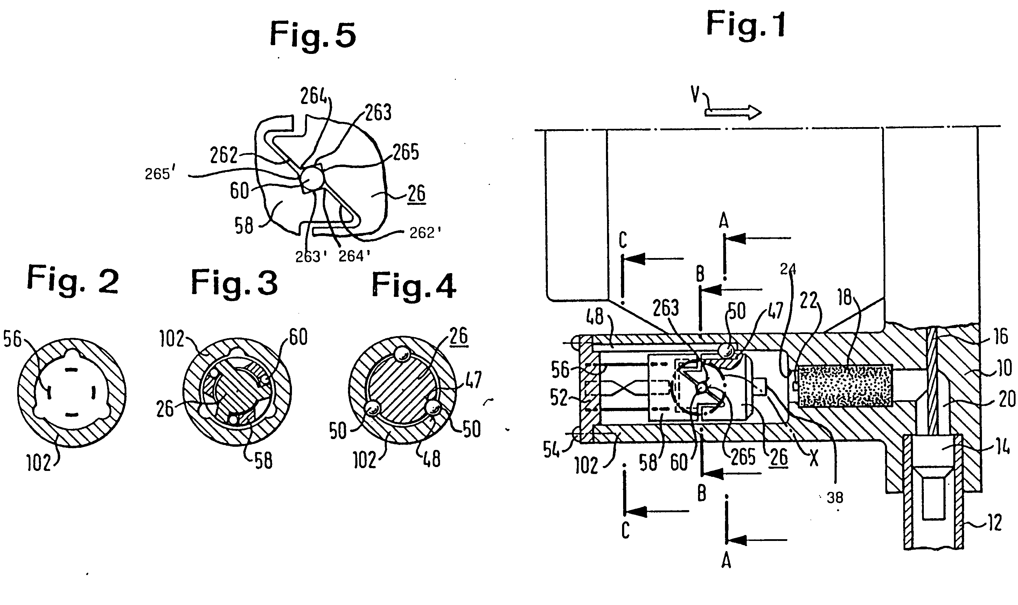

Eine Ausführungsform eines Zündmechanismus gemäß der Erfindung ist in den Fig. 1 bis 5 dargestellt. An einem Gehäuse eines Gurtaufrollers ist ein Gehäuseblock oder -sockel 10 für einen pyrotechnischen Gurtstrafferantrieb angebracht. In dem Gehäusesockel 10 ist in eine entsprechend ausgebildete Ausnehmung ein Zylinder 12 eingebracht, in dem ein Kolben 14, der mit einem Zugseil 16 verbunden ist, verschiebbar geführt ist. In einer Ausnehmung des Gehäusesockels 10 ist des weiteren ein pyrotechnischer Gasgenerator 18 angeordnet, der über einen Kanal 20 mit dem Zylinder 12 verbunden ist. Auf der von dem Kanal 20 abgewandten Seite des Gasgenerators 18 ist ein Schlagzünder 22 zum Auslösen des Gasgenerators 18 vorgesehen. Der Gasgenerator 18 und der Zylinder 12 sind bei der gezeigten Ausführung in einem rechten Winkel zueinander angeordnet, können aber auch koaxial ausgerichtet sein.

Der Gehäusesockel 10 weist eine Aussparung 24 auf, in die der Schlagzünder 22 des Gasgenerators 18 hineinragt und auf diese Weise für den Amboß 38 eines Schlagelements 26 zugänglich ist, das dem Schlagzünder 22 zugeordnet und gegenüberliegend ist. Das Schlagelement 26 ist auf den Schlagzünder 22 zu axial verschiebbar.

Der Gehäusesockel 10 weist einen sich an den Gasgenerator 18 anschließenden zylindrischen Teil 102 auf. In diesem zylindrischen Teil 102 des Gehäusesockels 10 ist das kolbenförmige Schlagelement 26 drehfest gelagert. Das Schlagelement 26 weist eine Nut 47 auf, der eine in dem Teil 102 vorgesehene Nut 48 gegenüberliegt. In dem durch diese Nuten 47 und 48 gebildeten Kanal ist eine Kugel 50 angeordnet, wodurch das Schlagelement 26 drehfest in dem Teil 102 gelagert ist. Das Schlagelement 26 ist jedoch in Axialrichtung verschiebbar. Wie insbesondere der Fig. 4 zu entnehmen ist, sind jeweils drei um 120° in Umfangsrichtung versetzt angeordnete Paare von Nuten 47 und 48 mit Kugeln 50 vorgesehen.

An dem Ende des zylindrischen Teils 102 des Gehäusesockels 10 ist ein Deckel 52 mit Verbindungselementen 54 befestigt. In den Deckel 52 sind sich in den zylindrischen Teil erstreckende Federn 56 eingebracht, die an ihrem anderen Ende in ein ebenfalls kolbenförmiges Übertragungselement 58 eingreifen, das dazu dient, ein durch die Federn 56 erzeugtes Drehmoment in eine das Schlagelement 26 beaufschlagende Axialkraft umzusetzen.

Hierzu ist das Übertragungselement 58 drehbar im Gehäuse 10 gelagert, während es durch die Federn 56 axial im wesentlichen festgelegt ist. Zwischen der Übersetzungseinrichtung 58 und dem drehfest sowie axial verschiebbar gelagerten Schlagelement 56 ist wenigstens ein Steuerbereich vorgesehen. Jeder Steuerbereich enthält eine dem Schlagelement 26 sowie eine der Übersetzungseinrichtung 58 zugeordnete Kurvenfläche, die aus den Kurvenflächenabschnitten 262, 263, 265 bzw. 262', 263', 265' zusammengesetzt ist. Diese ineinandergreifenden Kurvenflächen dienen als Anlageflächen für ein zwischen der Übersetzungseinrichtung 58 und dem Schlagelement 26 vorgesehenes Kraftübertragungselement, das vorzugsweise durch einen Wälzkörper 60, insbesondere eine Kugel oder dergleichen, gebildet ist. Der Steuerbereich ist gegenüber der Längsachse des Übersetzungselements 58 und des Schlagelements 26 versetzt angeordnet.

Die Kurvenfläche des Schlagelements 26 weist zwei zueinander geneigt verlaufende Kurvenflächenabschnitte 262, 263 auf. Diese beiden Kurvenflächenabschnitte 262, 263 besitzen somit bezüglich der Längsachse unterschiedliche Neigungen. Dabei bildet die Kante zwischen den beiden Kurvenflächenabschnitten 262, 263 einen Totpunkt 264. Entsprechend besitzen auch die beiden Kurvenflächenabschnitte 262', 263' der an der Übersetzungseinrichtung 58 vorgesehenen Kurvenfläche unterschiedliche Neigungen, wobei zwischen diesen Kurvenflächen 262', 263' unterschiedlicher Neigung entsprechend wiederum ein Totpunkt 264' definiert ist.

Die Federn 56 sind in bezug auf die Längsachse des drehbaren Übersetzungselementes 58 in tangentialer Richtung vorgespannt und erzeugen somit das Drehmoment. Dieses wird im Steuerbereich mittels der geneigten Kurvenflächen 262', 263', 265' und 262, 263, 265 und mittels des daran anliegenden Wälzkörpers 60 in die das Schlagelement 26 beaufschlagende Axialkraft umgesetzt.

Aufgrund der geneigten Kurvenflächenabschnitte 263, 263' des Schlagelementes 26 bzw. der Übersetzungseinrichtung 58, an denen der Wälzkörper 60 zunächst anliegt, wird das Schlagelement 26 in den Fig. 1 und 5 nach links gegen einen Anschlag 265' der Übersetzungseinrichtung 58 gezogen, an dem es mit einem als Widerlager dienenden Kurvenflächenabschnitt 265 über den Wälzkörper 60 anliegt. Die den Anschlag und das Widerlager bildenden Kurvenflächenabschnitte 265' bzw. 265 verlaufen im wesentlichen senkrecht zur Längsachse der Übersetzungseinrichtung 58 und des Schlagelementes 26. Demnach wird durch die Federn 56 eine Rückstellkraft erzeugt, durch die das Schlagelement 26 in einer vom Schlagzünder 22 abgelegenen Ausgangsstellung gehalten wird. In dieser Ruhe- oder Ausgangsstellung des Schlagelements 26 wird der Wälzkörper 60 somit durch den Kurvenflächenabschnitt 263' der Übersetzungseinrichtung 58 gegen den Kurvenflächenabschnitt 263 des Schlagelements 26 gedrückt.

Wird das Fahrzeug nun stark abgebremst, so ist das Schlagelement 26 aufgrund der auftretenden Trägheitskräfte bestrebt, sich in Richtung auf den Schlagzünder 22 des Gasgenerators 18 zu zubewegen. Die Fahrtrichtung des Fahrzeuges, in dem der erfindungsgemäße Zündmechanismus eingebaut ist, ist mit dem als V bezeichneten Pfeil angegeben. Dabei rollt der Wälzkörper 60 entlang den geneigten Kurvenflächenabschnitten 263, 263' in Richtung des Totpunktes, wodurch das Übersetzungselement 58 entgegen der Federkraft gedreht und die Drehmoment-Vorspannung weiter erhöht wird.

Aufgrund der geneigten Kurvenflächenabschnitte 263, 263' des Schlagelements 26 und der Übersetzungseinrichtung 58 wird somit gleichzeitig die axiale Rückstellkraft erhöht, indem der Wälzkörper 60 im Verlauf seiner axialen Verlagerung bis zum Totpunkt 264, 264' durch den zur Längsachse geneigten Kurvenflächenabschnitt 263 des Schlagelements 26 gegen den ebenfalls geneigten Kurvenflächenabschnitt 263' der Übersetzungseinrichtung 58 gedrängt wird, die dadurch weiter entgegen der Federkraft um die Längsachse gedreht wird.

Nach dem Überschreiten der Totpunkte 264, 264' der am Schlagelement 26 bzw. an der Übersetzungseinrichtung 58 vorgesehenen Kurvenflächen 262, 263 bzw. 262', 263' steht der Wälzkörper 60 nicht mehr in Eingriff mit den die Rückstellkraft bewirkenden Kurvenflächenabschnitten 263, 263', wodurch das Schlagelement 26 von der Übersetzungseinrichtung freigegeben wird.

Der Wälzkörper 60 liegt nunmehr zwischen den Kurvenflächenabschnitten 262, 262', wodurch die Wirkungsrichtung der Federlast umgekehrt und das Schlagelement 26 durch die gleichen Federn 56 in Richtung auf den Schlagzünder 22 des Gasgenerators 18 zu beschleunigt und von der Übersetzungseinrichtung 58 getrennt wird. Schließlich trifft das derart beschleunigte Schlagelement 26 mit seinem Amboß 38 auf den Schlagzünder 22 des Gasgenerators 18, wodurch der Gasgenerator 18 gezündet und der Straffervorgang in bekannter Weise ausgelöst wird.

Mit Erreichen der einander entsprechenden Totpunkte 264, 264' tritt somit eine Umkehr der durch die Übersetzungseinrichtung 58 auf das Schlagelement 26 ausgeübten Axialkraft auf, wobei die die Beschleunigung bewirkende Federkraft durch das bis zum Erreichen des Totpunkts weitere Spannen der Federn noch erhöht wird.

Ist die Fahrzeugbeschleunigung dagegen zu gering, um eine solche Auslösung herbeizuführen, so wird das Schlagelement infolge der bis zum Totpunkt zunehmenden Federvorspannung bzw. die dadurch bedingte axiale Rückstellkraft nach einem Nachlassen der Trägheitskräfte wieder gegen den Anschlag 265' zurückgedrängt.

Wie in der Figur 2 dargestellt ist, sind vier zueinander versetzt angeordnete Federn 56 vorgesehen. Grundsätzlich können es aber zwei oder mehr Federn 56 sein.

Der Fig. 3 ist zu entnehmen, daß drei Steuerbereiche in einer Ebene, die senkrecht zur Längsachse Schlagelements 26 verläuft, vorgesehen sind. Die Steuerbereiche sind dabei in einem Winkel von 120° in Umfangsrichtung angeordnet. Durch diese erfindungsgemäße Ausführungsform ist eine kompakte Ausbildung des Zündmechanismus möglich, der einen geringen Platzbedarf aufweist.

Bei allen Ausführungsformen kann das Gehäuse 10 aus Aluminium oder Zinkdruckguß oder ähnlichem Werkstoff gebildet sein. Das Schlagelement 26 kann ebenso wie der Wälzkörper 36 aus einem Sinter- oder Stahlwerkstoff gefertigt sein.

## Patentansprüche

1. Zündmechanismus für einen pyrotechnischen Gasgenerator (18) eines Insassenrückhaltesystems für Fahrzeuge, mit einem einem Schlagzünder (22) des Gasgenerators (18) zugeordneten Schlagelement (26), das in eine erste und eine zweite, entgegengesetzte Richtung verschiebbar in einem Gehäuse (10) geführt ist, und mindestens einer gespannten Feder (56), die das Schlagelement (26) in die erste Richtung gegen einen Anschlag (265') belastet und der Bewegung des Schlagelements (26) in die zweite Richtung aufgrund der bei einer Beschleunigung des Fahrzeugs wirkenden Trägheitskräfte eine bis Erreichen eines Totpunkts (264, 264') anwachsende Kraft entgegensetzt, deren Wirkrichtung bei Überschreiten des Totpunkts (264, 264') umgekehrt wird, so daß das Schlagelement (26) zur Auslösung des Schlagzünders (22) in die zweite Richtung beschleunigt wird, **dadurch gekennzeichnet**, daß die Feder (56) ein Drehmoment erzeugt, das durch eine Übersetzungseinrichtung (58) in eine das Schlagelement (26) beaufschlagende Axialkraft umgesetzt wird.

2. Zündmechanismus nach Anspruch 1, **dadurch gekennzeichnet**, daß das Schlagelement (26) drehfest und die Übersetzungseinrichtung (58) drehbar im Gehäuse (10) gelagert ist und daß zwischen der Übersetzungseinrichtung (58) und dem Schlagelement (26) wenigstens ein Steuerbereich vorgesehen ist, der der Übersetzungseinrichtung (58) bzw. dem Schlagelement (26) zugeordnete ineinandergreifende Kurvenflächen (262, 263, 265; 262', 263', 265') enthält, die als Anlageflächen für ein zwischen der Übersetzungseinrichtung (58) und dem Schlagelement (26) vorgesehenes Kraftübertragungselement (60) dienen.

3. Zündmechanismus nach Anspruch 2, **dadurch gekennzeichnet**, daß das Kraftübertragungselement ein in der Übersetzungseinrichtung (58) oder in dem Schlagelement (26) gelagerter Wälzkörper (60) ist.

4. Zündmechanismus nach Anspruch 3, **dadurch gekennzeichnet**, daß mehrere Steuerbereiche vorgesehen sind, die in Umfangsrichtung gleich beabstandet sind und in einer zur Längsachse des Schlagelements (26) senkrechten Ebene liegen.

5. Zündmechanismus nach einem der Ansprüche 2 bis 4, **dadurch gekennzeichnet**, daß jede Kurvenfläche (262, 263, 265; 262', 263', 265') einen im wesentlichen senkrecht zur Längsachse verlaufenden Bereich (265, 265') aufweist, der den Anschlag (265') bzw. ein Widerlager (265) bildet.

6. Zündmechanismus nach einem der Ansprüche 2 bis 5, dadurch gekennzeichnet, daß die drehbar im Gehäuse (10) gelagerte Übersetzungseinrichtung (58) axial festgelegt ist, daß der zwischen der Übersetzungseinrichtung (58) und dem drehfest sowie axial verschiebbar gelagerten Schlagelement (26) gelegene Steuerbereich beiderseits des Totpunkts (264, 264') Kurvenflächenabschnitte (262, 262'; 263, 263') unterschiedlicher Neigung enthält, und daß diese unterschiedlichen Neigungen so gewählt sind, daß das Schlagelement (26) in einer Ausgangsstellung durch eine durch die Feder (56) bedingte Rückstellkraft gegen die Übersetzungseinrichtung (58) gehalten ist, während es aufgrund der bei einer Beschleunigung des Fahrzeugs wirkenden Trägheitskräfte zunächst entgegen der Rückstellkraft zum Schlagzünder (22) hin verschoben wird und nach einem Überschreiten des Totpunkts (264, 264') durch die gleiche Feder (56) auf den Schlagzünder (22) zu beschleunigt und hierbei von der Übersetzungseinrichtung (58) getrennt wird.

7. Zündmechanismus nach einem der Ansprüche 2 bis 6, **dadurch gekennzeichnet**, daß die drehfeste Lagerung des Schlagelements (26) im Gehäuse (10) durch eine in das Gehäuse (10) und eine in das Schlagelement (26) eingebrachte Nut (46, 47) und durch eine sich in den einander gegenüberliegenden Nuten (46, 47) vorgesehene Kugel (50) gebildet ist.

## Claims

1. An igniter mechanism for a pyrotechnical gas generator (18) of a vehicle occupant restraining system, having an impact member (26) assigned to the impact igniter (22) of the gas generator (18), the impact member (26) being axially slidable in a first and an opposite second direction in a housing (10) and including at least one tensioned spring (56) to load the impact element (26) in the first direction against a stop (265') and to counteract movement of the impact member (26) in the second direction as a result of the forces of inertia acting on acceleration of the vehicle by means of a force which grows until a dead center (264, 264') is reached, the effective direction of the force being reversed when the dead center (264, 264') is passed so that the impact member (26) is accelerated in the second direction for triggering the impact igniter (22), **characterized in that** the spring (56) generates a torque which is converted by conversion means (58) into an axial force acting on the impact member (26).

2. An igniter mechanism according to claim 1 **characterized in that** the impact member (26) is mounted non-rotatably and the conversion means (58) is mounted rotatably in the housing (10), and in that at least one control region is provided between the conversion means (58) and the impact member (26), said control region comprising interengaging cam surfaces (262, 263, 265; 262', 263', 265') connected to the conversion means (58) and the impact member (26), respectively, the cam surfaces acting as abutment surfaces for a force transmission member (60) provided between the conversion means (58) and the impact member (26).

3. An igniter mechanism according to claim 2 **characterized in that** the force transmission member is formed by a roller body (60) mounted on the conversion means (58) or on the impact member (26).

4. An igniter mechanism according to claim 3 **characterized in that** a plurality of control regions are provided located equally spaced circumferentially and in a plane perpendicular to the longitudinal axis of the impact member (26).

5. An igniter mechanism according to any of the claims 2 to 4 **characterized in that** each of the cam surfaces (262, 263, 265; 262', 263', 265') has a region (265, 265') extending substantially perpendicular to the longitudinal axis and forming the stop (265') and the abutment (265), respectively.

6. An igniter mechanism according to any of the claims 2 to 5, **characterized in that** the conversion means (58) mounted rotatably in the housing (10) is fixed axially, that the control region located between the conversion means (58) and the rotationally fixed and axially displaceable impact member (26) comprises on both sides of the dead center (264, 264') cam surface regions (262, 262'; 263, 263') with different inclinations, and that the inclinations are set in such a manner that the impact member (26) is held in an initial position against the conversion means (58) due to a return force produced by the spring (56) while the impact member as a result of the forces of inertia acting on acceleration of the vehicle at first is displaced against the return force towards the impact igniter (22) and after passing the dead center (264, 264') is accelerated by the same spring (56) towards the impact igniter (22) and hereon is seperated from the conversion means (58).

7. An igniter mechanism according to any of the claims 2 to 6 **characterized in that** the non-rotational mounting of the impact member (26) in the housing (10) is defined by grooves (46, 47) provided in the housing (10) and the impact member (26) and by a ball (50) located in the grooves (46, 47) facing each other.

## Revendications

1. Mécanisme d'amorçage pour un générateur pyrotechnique de gaz (18) d'un système de retenue de passagers pour véhicules, comprenant un élément de percussion (26) qui est associé à une amorce à percussion (22) du générateur de gaz (18) et qui est guidé dans un boîtier (10) de manière coulissante dans une première direction et dans une seconde direction opposée, et comprenant au moins un ressort tendu (56) qui sollicite l'élément de percussion (26) dans la première direction contre une butée (265') et qui, en raison des forces d'inertie agissant lors d'une accélération du véhicule, oppose au déplacement de l'élément de percussion (26) dans la seconde direction une force qui augmente jusqu'à atteindre un point mort (264, 264') et dont le sens d'action est inversé en cas de dépassement du point mort (264, 264'), de sorte que l'élément de percussion (26) est accéléré dans la seconde direction pour mettre à feu l'amorce à percussion (22), caractérisé en ce que le ressort (56) produit un couple de rotation qui est converti par un dispositif démultiplicateur (58) en une force axiale qui sollicite l'élément de percussion (26).

2. Mécanisme d'amorçage selon la revendication 1, caractérisé en ce que l'élément de percussion (26) est monté dans le boîtier (10) sans possibilité de rotation et le dispositif démultiplicateur (58) y est monté avec possibilité de rotation, et en ce qu'entre le dispositif démultiplicateur (58) et l'élément de percussion (26), il est prévu au moins une zone de commande qui contient des surfaces courbes (262, 263, 265 ; 262', 263', 265') qui sont emboîtées les unes dans les autres et sont associées respectivement au dispositif démultiplicateur (58) et à l'élément de percussion (26) et qui servent de surfaces d'appui à un élément transmetteur de force (60) disposé entre le dispositif démultiplicateur (58) et l'élément de percussion (26).

3. Mécanisme d'amorçage selon la revendication 2, caractérisé en ce que l'élément transmetteur de force est un corps de révolution (60) logé dans le dispositif démultiplicateur (58) ou dans l'élément de percussion (26).

4. Mécanisme d'amorçage selon la revendication 3, caractérisé en ce qu'il est prévu plusieurs zones de commande qui sont espacées à intervalles réguliers dans le sens circonférentiel et se trouvent dans un plan perpendiculaire à l'axe longitudinal de l'élément de percussion (26).

5. Mécanisme d'amorçage selon l'une des revendications 2 à 4, caractérisé en ce que chaque surface courbe (262, 263, 265 ; 262', 263', 265') comporte une zone (265, 265') qui est sensiblement perpendiculaire à l'axe longitudinal et qui forme la butée (265') ou une contre-butée (265).

6. Mécanisme d'amorçage selon l'une des revendications 2 à 5, caractérisé en ce que le dispositif démultiplicateur (58) monté avec possibilité de rotation dans le boîtier (10) est immobilisé axialement, en ce que la zone de commande située entre le dispositif démultiplicateur (58) et l'élément de percussion (26) monté sans possibilité de rotation et avec possibilité de déplacement axial comporte, de part et d'autre du point mort (264, 264'), des portions de surfaces courbes (262, 262' ; 263, 263') d'inclinaisons différentes, et en ce que ces différentes inclinaisons sont calculées pour que l'élément de percussion (26) soit maintenu dans une position initiale contre le dispositif démultiplicateur (58) par une force de rappel exercée par le ressort (56), tandis que, sous l'effet des forces d'inertie agissant en cas d'accélération du véhicule, il est d'abord déplacé vers l'amorce à percussion (22) à l'encontre de la force de rappel et, une fois le point mort (264, 264') dépassé, il est accéléré par le même ressort (56) en direction de l'amorce à percussion (22) et est ainsi séparé du dispositif démultiplicateur (58).

7. Mécanisme d'amorçage selon l'une des revendications 2 à 6, caractérisé en ce que les moyens de montage de l'élément de percussion (26) sans possibilité de rotation dans le boîtier (10) sont constitués par une gorge (46, 47) ménagée dans le boîtier (10), par une gorge (46, 47) ménagée dans l'élément de percussion (26) et par une bille (50) logée dans les gorges (46, 47) placées en vis-à-vis.
